# EUROPÄISCHE PATENTSCHRIFT

(11) **EP 3 003 766 B1**
(45) Veröffentlichungstag und Bekanntmachung des Hinweises auf die Patenterteilung: **22.11.2017**
(21) Anmeldenummer: 14725966.7
(22) Anmeldetag: 21.05.2014
(51) Int. Cl.: B60K 17/356, B60K 6/52

(54) **MITTENDIFFERENTIALGETRIEBEANORDNUNG FÜR EINE ANTRIEBSEINRICHTUNG EINES KRAFTFAHRZEUGS**
CENTRAL DIFFERENTIAL TRANSMISSION ARRANGEMENT FOR A DRIVE DEVICE OF A MOTOR VEHICLE
DISPOSITIF DIFFÉRENTIEL CENTRAL POUR UN SYSTÈME D'ENTRAÎNEMENT DE VÉHICULE AUTOMOBILE

(30) Priorität: 29.05.2013 DE 102013009081
(43) Veröffentlichungstag der Anmeldung: 13.04.2016
(73) Patentinhaber: Audi AG, 85045 Ingolstadt (DE)
(72) Erfinder: WEIN, Michael, 92358 Seubersdorf (DE)
(86) Internationale Anmeldenummer: PCT/EP2014/001368
(87) Internationale Veröffentlichungsnummer: WO 2014/191091

(56) Entgegenhaltungen:
- EP-A2- 1 637 381
- WO-A1-2012/079827
- WO-A2-2006/029434
- AT-U1- 6 377
- DE-A1-102008 029 287
- DE-A1-102011 007 265
- DE-A1-102011 007 268
- JP-A- 2005 170 159
- JP-A- 2007 246 056
- JP-A- 2012 111 394

## Beschreibung

Die Erfindung betrifft eine Mittendifferentialgetriebeanordnung für eine Antriebseinrichtung eines Kraftfahrzeugs mit einer Antriebswelle, mit einer ersten Abtriebswelle für eine Vorderachse des Kraftfahrzeugs und einer zweiten Abtriebswelle für eine Hinterachse des Kraftfahrzeugs sowie mit einem als Planetengetriebe ausgebildeten Differentialgetriebe.

Die Mittendifferentialgetriebeanordnung dient dem Aufteilen eines über die Antriebswelle zugeführten beziehungsweise bereitgestellten Antriebsmoments auf die beiden Abtriebswellen, nämlich auf die erste Abtriebswelle und die zweite Abtriebswelle. Die erste Abtriebswelle ist dabei beispielsweise mit der Vorderachse des Kraftfahrzeugs und die zweite Abtriebswelle mit der Hinterachse des Kraftfahrzeugs wirkverbunden, insbesondere unmittelbar wirkverbunden. Alternativ kann auch eine umgekehrte Ausgestaltung vorgesehen sein, bei welcher die erste Abtriebswelle der Hinterachse und die zweite Abtriebswelle der Vorderachse zugeordnet ist. Das Differentialgetriebe, welches die Antriebswelle und die beiden Abtriebswellen miteinander in Wirkverbindung setzt, ist als Planetengetriebe ausgeführt. Die EP1637381 offenbart eine Mittendifferentialgetriebeanordnung mit den Merkmalen des Oberbegriffes des Anspruchs 1. Es ist nun Aufgabe der Erfindung, eine kompakte Mittendifferentialgetriebeanordnung für eine Antriebseinrichtung eines Kraftfahrzeugs vorzuschlagen, welche eine effiziente Aufteilung des Antriebsmoments auf die beiden Antriebswellen mit Differentialausgleich und gleichzeitig die Rekuperation eines über die Abtriebswellen bereitgestellten Drehmoments ermöglicht.

Dies wird erfindungsgemäß mit einer Mittendifferentialgetriebeanordnung mit den Merkmalen des Anspruchs 1 erreicht. Dabei ist eine Kupplungseinrichtung vorgesehen, die eine elektrische Maschine in einer ersten Schaltstellung über das Differentialgetriebe und in einer zweiten Schaltstellung unmittelbar mit der zweiten Abtriebswelle in Wirkverbindung setzt. In der ersten Schaltstellung dient die elektrische Maschine dem Aufteilen des Antriebsmoments auf die beiden Abtriebswellen. Das Differentialgetriebe ist in diesem Fall also als aktives Mittendifferentialgetriebe ausgeführt. In der zweiten Schaltstellung soll dagegen die elektrische Maschine unmittelbar, also nicht oder zumindest nicht ausschließlich über das Differentialgetriebe, mit der zweiten Abtriebswelle wirkverbunden sein.

Insoweit kann mithilfe der elektrischen Maschine ein zusätzliches Antriebsmoment auf die zweite Abtriebswelle aufgebracht werden, insbesondere um das Kraftfahrzeug zusätzlich zu beschleunigen, oder alternativ eine Rekuperation durchgeführt werden, bei welcher die elektrische Maschine als Generator betrieben wird. Entsprechend wird im Rahmen der Rekuperation zumindest die zweite Abtriebswelle von der elektrischen Maschine abgebremst und die entsprechende kinetische Energie in elektrische Energie umgesetzt. Eine derartige Mittendifferentialgetriebeanordnung ist insbesondere für ein Mildhybridkraftfahrzeug besonders geeignet, weil die elektrische Maschine keine besonders hohe Leistung aufweisen muss. Mithilfe der beschriebenen Mittendifferentialgetriebeanordnung wird die Kombination eines elektrischen Überlagerungsdifferentials und einer Hybridfunktion für eine aktive Mittenverteilung in einer besonders kompakten Bauform realisiert.

Eine besonders bevorzugte Ausgestaltung der Erfindung sieht vor, dass ein Hohlrad des Differentialgetriebes unmittelbar mit der Antriebswelle, ein Planetenträger des Differentialgetriebes unmittelbar mit der ersten Abtriebswelle und ein Sonnenrad des Differentialgetriebes unmittelbar mit der zweiten Abtriebswelle wirkverbunden ist, wobei an dem Planetenträger wenigstens ein mit dem Hohlrad kämmendes äußeres Planetenrad und wenigstens ein sowohl mit dem äußeren Planetenrad als auch dem Sonnenrad kämmendes inneres Planetenrad gelagert sind. Unter der unmittelbaren Wirkverbindung ist zu verstehen, dass diese nicht über das Differentialgetriebe verläuft, sondern dass das jeweilige Element des Differentialgetriebes drehfest mit der entsprechenden Welle in Wirkverbindung steht.

Die hier verwendete Ausführungsform des Differentialgetriebes zeichnet sich dadurch aus, dass mehrere miteinander kämmende Planetenräder, nämlich das äußere Planetenrad und das innere Planetenrad, vorgesehen sind. Weil das äußere Planetenrad mit dem Hohlrad und das innere Planetenrad mit dem Sonnenrad kämmt, wird über die beiden Planetenräder eine Wirkverbindung zwischen dem Hohlrad und dem Sonnenrad hergestellt. Sowohl das äußere Planetenrad als auch das innere Planetenrad sind an demselben Planetenträger drehbar gelagert. Bezüglich einer Drehachse des Planetenträgers liegt dabei das äußere Planetenrad in radialer Richtung weiter außen als das innere Planetenrad. Das äußere Planetenrad und das innere Planetenrad bilden gemeinsam ein Planetenradpaar.

Selbstverständlich kann eine beliebige Anzahl derartiger Planetenradpaare vorgesehen sein. Beispielsweise ist lediglich ein einziges Planetenradpaar, bevorzugt jedoch mehrere, insbesondere drei, Planetenradpaare vorgesehen. Ein derartiges Differentialgetriebe stellt zunächst ein völlig normales Getriebe zur Wirkverbindung der Antriebswelle mit den beiden Abtriebswellen dar, wobei eine Differentialfunktion realisiert wird.

In einer Weiterbildung der Erfindung ist vorgesehen, dass das Differentialgetriebe einen ersten Getriebeteil eines reduzierten Koppelgetriebes aufweist und ein zweiter Getriebeteil des reduzierten Koppelgetriebes einem Zwischengetriebe zugeordnet ist, dessen Sonnenrad an einer Zwischenwelle vorgesehen ist. Unter einem reduzierten Koppelgetriebe sind im Rahmen der beschriebenen Mittendifferentialgetriebeanordnung zwei über ihren Planetenträger wirkverbundene Planetengetriebe zu verstehen. Das erste Getriebeteil des reduzierten Koppelgetriebes wird insoweit beispielsweise von dem inneren Planetenrad des Differentialgetriebes ausgebildet. Der zweite Getriebeteil ist mit dem inneren Planetenrad drehfest verbunden und bezüglich derselben Achse des Planetenträgers des Differentialgetriebes drehbar gelagert. Der zweite Getriebeteil bildet das Zwischengetriebe mit aus. Das Sonnenrad dieses Zwischengetriebes ist drehfest mit der Zwischenwelle wirkverbunden.

Insoweit besteht das reduzierte Koppelgetriebe aus dem ersten Getriebeteil, welcher insbesondere das Hohlrad, den Planetenträger mit dem äußeren Planetenrad und dem inneren Planetenrad sowie das Hohlrad des Differentialgetriebes umfasst, als auch aus dem zweiten Getriebeteil, welcher ein Planetenrad als auch das Sonnenrad des Zwischengetriebes aufweist. Mithin sind über das reduzierte Koppelgetriebe also nicht nur die beiden Abtriebswellen mit der Antriebswelle gekoppelt, sondern zusätzlich auch noch die Zwischenwelle.

Eine besonders bevorzugte Ausgestaltung der Erfindung sieht ein aus einem ersten Planetengetriebe und einem zweiten Planetengetriebe bestehendes Überlagerungsgetriebe vor, wobei die Hohlräder der beiden Planetengetriebe drehfest miteinander wirkverbunden sind. Über das Überlagerungsgetriebe ist die elektrische Maschine mit dem Differentialgetriebe und/oder der zweiten Abtriebswelle unmittelbar wirkverbindbar. Das erste Planetengetriebe des Überlagerungsgetriebes ist dabei dem Differentialgetriebe und das zweite Planetengetriebe der zweiten Abtriebswelle zugeordnet. Die Hohlräder der beiden Planetengetriebe sind beispielsweise drehfest miteinander wirkverbunden oder werden von einem gemeinsamen, beiden Planetengetrieben zugeordneten Hohlrad ausgebildet.

Eine bevorzugte Ausgestaltung der Erfindung sieht vor, dass ein Sonnenrad des ersten Planetengetriebes festgesetzt ist. Das Sonnenrad des ersten Planetengetriebes des Überlagerungsgetriebes ist mithin ortsfest angeordnet. Zu diesem Zweck ist es beispielsweise an einem Gehäuse der Mittendifferentialgetriebeanordnung befestigt.

Eine weitere Ausgestaltung der Erfindung sieht vor, dass ein Planetenträger des ersten Planetengetriebes drehfest mit einer ersten Eingangswelle des Überlagerungsgetriebes wirkverbunden ist. Das Überlagerungsgetriebe weist die erste Eingangswelle, eine zweite Eingangswelle sowie eine Ausgangswelle auf, wobei die Ausgangswelle beispielsweise mit der elektrischen Maschine drehfest wirkverbunden ist und die zweite Eingangswelle drehfest mit der zweiten Abtriebswelle wirkverbunden ist.

Eine Weiterbildung der Erfindung sieht vor, dass ein Sonnenrad des zweiten Planetengetriebes drehfest mit der elektrischen Maschine wirkverbunden ist. Dieses Sonnenrad stellt mithin die Ausgangswelle des Überlagerungsgetriebes dar beziehungsweise ist mit dieser unmittelbar wirkverbunden. Über die Ausgangswelle ist die Wirkverbindung des Sonnenrads zu der elektrischen Maschine hergestellt beziehungsweise herstellbar. Selbstverständlich kann das Sonnenrad alternativ auch Bestandteil der elektrischen Maschine sein, sodass insoweit keine separate Ausgangswelle notwendig ist, sondern eine solche nur im übertragenen Sinne vorliegt.

Eine bevorzugte Weiterbildung der Erfindung sieht vor, dass ein Planetenträger des zweiten Planetengetriebes drehfest mit einer zweiten Eingangswelle des Überlagerungsgetriebes wirkverbunden ist, wobei die zweite Eingangswelle drehfest mit der zweiten Abtriebswelle in Wirkverbindung steht oder diese wenigstens teilweise ausbildet. Wie bereits vorstehend erläutert, ist die zweite Eingangswelle mit der zweiten Abtriebswelle verbunden. Alternativ kann sie diese wenigstens bereichsweise ausbilden. Die zweite Eingangswelle ist nun an den Planetenträger des zweiten Planetengetriebes des Überlagerungsgetriebes angeschlossen. Eine Wirkverbindung der elektrischen Maschine und der zweiten Abtriebswelle kann also über das zweite Planetengetriebe hergestellt werden. Vorstehend wurde bereits erläutert, dass analog dazu eine Wirkverbindung der elektrischen Maschine zu dem Differentialgetriebe über die erste Eingangswelle und mithin das erste Planetengetriebe des Überlagerungsgetriebes herstellbar ist.

In einer bevorzugten Weiterbildung der Erfindung ist vorgesehen, dass in der ersten Schaltstellung der Kupplungseinrichtung die Zwischenwelle mit der ersten Eingangswelle drehfest wirkverbunden ist. Alternativ oder zusätzlich kann in der zweiten Schaltstellung der Kupplungseinrichtung die erste Eingangswelle festgesetzt sein. Die Kupplungseinrichtung weist insoweit beispielsweise zwei Schaltstellungen, nämlich die erste Schaltstellung und die zweite Schaltstellung auf. Die Kupplungseinrichtung beeinflusst insbesondere die erste Eingangswelle des Überlagerungsgetriebes. In der ersten Schaltstellung ist diese mit der ersten Eingangswelle unmittelbar, also drehfest, wirkverbunden. Das bedeutet, dass der Planetenträger des ersten Planetengetriebes dieselbe Drehzahl aufweist wie das Sonnenrad des Zwischengetriebes.

Wird dagegen die zweite Schaltstellung der Kupplungseinrichtung eingestellt, so ist die erste Eingangswelle festgesetzt. Weil zudem bevorzugt, wie bereits vorstehend beschrieben wurde, das Sonnenrad des ersten Planetengetriebes ebenfalls festgesetzt ist, ist das erste Planetengetriebe in der zweiten Schaltstellung vollständig blockiert, sodass auch sein Hohlrad festgesetzt ist. Das bedeutet, dass aufgrund des festgesetzten Hohlrads eine unmittelbare Wirkverbindung zwischen der elektrischen Maschine und der zweiten Eingangswelle beziehungsweise der zweiten Abtriebswelle über das zweite Planetengetriebe des Überlagerungsgetriebes hergestellt ist.

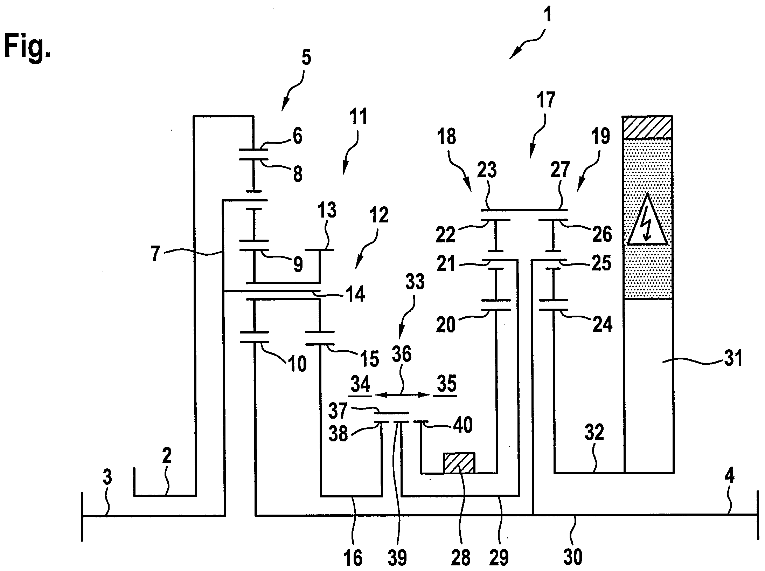

Die Erfindung wird nachfolgend anhand der in der Zeichnung dargestellten Ausführungsform näher erläutert, ohne dass eine Beschränkung der Erfindung erfolgt. Dabei zeigt die einzige
- Figur: eine schematische Darstellung einer Mittendifferentialgetriebeanordnung für eine Antriebseinrichtung eines Kraftfahrzeugs.

Die Figur zeigt eine schematische Darstellung einer Mittendifferentialgetriebeanordnung 1, wie sie beispielsweise für eine Antriebseinrichtung eines Kraftfahrzeugs Anwendung findet. Die Mittendifferentialgetriebeanordnung 1 weist eine Antriebswelle 2 auf, über welche beispielsweise ein hier nicht dargestelltes Antriebsaggregat, insbesondere eine Brennkraftmaschine, an die Mittendifferentialgetriebeanordnung 1 angeschlossen ist. Weiterhin weist die Mittendifferentialgetriebeanordnung 1 eine erste Abtriebswelle 3 und eine zweite Abtriebeswelle 4 auf. An die erste Abtriebswelle 3 ist beispielsweise eine Vorderachse des Kraftfahrzeugs, an die zweite Abtriebswelle 4 eine Hinterachse des Kraftfahrzeugs angeschlossen, beispielsweise jeweils über ein Achsgetriebe. Über die Mittendifferentialgetriebeanordnung 1 kann insoweit das von dem Antriebsaggregat bereitgestellte und über die Antriebswelle 2 anliegende Antriebsmoment auf die beiden Abtriebswellen 3 und 4 und mithin die Achsen des Kraftfahrzeugs aufgeteilt werden.

Die Mittendifferentialgetriebeanordnung 1 weist ein Differentialgetriebe 5 auf, welches als Planetengetriebe ausgebildet ist. Das Differentialgetriebe 5 beziehungsweise das Planetengetriebe besteht im Wesentlichen aus einem Hohlrad 6, einem Planetenträger 7, an welchem ein äußeres Planetenrad 8 und ein mit diesem kämmendes inneres Planetenrad 9 drehbar gelagert sind sowie aus einem Sonnenrad 10. Das Hohlrad 6 ist unmittelbar mit der Antriebswelle 2 wirkverbunden. Der Planetenträger 7 steht in drehfester Wirkverbindung mit der ersten Abtriebswelle 3 und das Sonnenrad 10 in drehfester Wirkverbindung mit der zweiten Abtriebswelle 4. Zur Drehmomentübertragung zwischen der Antriebswelle 2 und den beiden Abtriebswellen 3 und 4 kämmt nun das äußere Planetenrad mit dem Hohlrad 6 und dem inneren Planetenrad 9, während letzteres zusätzlich mit dem Sonnenrad 10 kämmt. Ein an der Antriebswelle 2 anliegendes Drehmoment wird also über das Differentialgetriebe 5 auf die Abtriebswellen 3 und 4 verteilt.

Das Differentialgetriebe 5 ist Bestandteil eines reduzierten Koppelgetriebes 11 beziehungsweise weist einen ersten Getriebeteil dieses Koppelgetriebes 11 auf. Ein zweiter Getriebeteil des Koppelgetriebes 11 ist einem Zwischengetriebe 12 zugeordnet beziehungsweise wird von diesem gebildet, welches neben einem Planetenrad 13, das mit dem inneren Planetenrad 9 drehfest wirkverbunden ist und an einer gemeinsamen Achse 14 des Planetenträgers 7 gelagert ist, ein Sonnenrad 15 aufweist. Dieses ist mit einer Zwischenwelle 16 drehfest wirkverbunden. Das reduzierte Koppelgetriebe 11 besteht insoweit aus dem Differentialgetriebe 5 sowie dem Zwischengetriebe 12 und stellt eine Wirkverbindung zwischen der Antriebswelle 2, den Abtriebswellen 3 und 4 sowie der Zwischenwelle 16 her.

Neben dem Differentialgetriebe 5 und dem Zwischengetriebe 12 weist die Mittendifferentialgetriebeanordnung 1 ein Überlagerungsgetriebe 17 auf. Dieses besteht aus einem ersten Planetengetriebe 18 und einem zweiten Planetengetriebe 19. Das erste Planetengetriebe 18 verfügt über ein Sonnenrad 20, einen Planetenträger 21 mit wenigstens einem Planetenrad 22 sowie über ein Hohlrad 23. Analog dazu verfügt das zweite Planetengetriebe 19 über ein Sonnenrad 24, einen Planetenträger 25 mit wenigstens einem Planetenrad 26 sowie über ein Hohlrad 27. Die beiden Hohlräder 23 und 27 sind drehfest miteinander wirkverbunden, beispielsweise werden sie von einem gemeinsamen Hohlrad ausgebildet.

Es ist erkennbar, dass das Sonnenrad des ersten Planetengetriebes 18 festgesetzt ist, beispielsweise durch eine Befestigung 28, insbesondere bezüglich eines Gehäuses der Mittendifferentialgetriebeanordnung 1. Der Planetenträger 21 des ersten Planetengetriebes 18 ist unmittelbar mit einer ersten Eingangswelle 29 des Überlagerungsgetriebes 17 drehfest wirkverbunden. Analog dazu ist der Planetenträger 25 mit einer zweiten Eingangswelle 30 unmittelbar und drehfest wirkverbunden, wobei die zweite Eingangswelle 30 drehfest mit der zweiten Abtriebswelle 4 in Wirkverbindung steht oder diese wenigstens teilweise ausbildet. Das Sonnenrad 24 des zweiten Planetengetriebes 19 ist mit einer elektrischen Maschine 31 drehfest wirkverbunden, beispielsweise über eine Ausgangswelle 32 des Überlagerungsgetriebes 17.

Zusätzlich ist der Mittendifferentialgetriebeanordnung 1 eine Kupplungseinrichtung 33 zugeordnet. Mit dieser kann die elektrische Maschine 31 entweder - in einer ersten Schaltstellung 34 - über das Differentialgetriebe 5 oder - in einer zweiten Schaltstellung 35 - unmittelbar mit der zweiten Abtriebswelle 4 in Wirkverbindung gesetzt werden. In der ersten Schaltstellung 34 ist beispielsweise ein in Richtung des Doppelpfeils 36 verlagerbares Hohlrad 37, das auch als Schaltmuffe bezeichnet werden kann, derart angeordnet, dass es mit Zahnrädern 38 und 39 kämmt. Das Zahnrad 38 ist dabei mit der Zwischenwelle 16 drehfest wirkverbunden, während das Zahnrad 39 mit der ersten Eingangswelle 29 drehfest wirkverbunden ist.

Befindet sich dagegen das Hohlrad 37 in der zweiten Schaltstellung 35, so kämmt es mit dem Zahnrad 39 und einem Zahnrad 40, wobei letzteres ortsfest angeordnet ist und beispielsweise mit dem Sonnenrad 20 des ersten Planetengetriebes 18 des Überlagerungsgetriebes 17 in drehfester Wirkverbindung steht beziehungsweise mittels der Befestigung 28 festgesetzt ist. In der ersten Schaltstellung 34 liegt also eine drehfeste Kopplung der Zwischenwelle 16 und der ersten Eingangswelle 29 vor. In der zweiten Schaltstellung 35 ist die erste Eingangswelle 29 dagegen festgesetzt. Insoweit liegt in der ersten Schaltstellung 34 eine Wirkverbindung zwischen der elektrischen Maschine 31 und der zweiten Abtriebswelle 4 über das Differentialgetriebe 5 vor, während die Wirkverbindung in der zweiten Schaltstellung 35 unmittelbar, nämlich über das zweite Planetengetriebe 19, vorliegt.

Insoweit dient die Mittendifferentialgetriebeanordnung 1 in der ersten Schaltstellung 34 als aktives Mittendifferential. Das bedeutet, dass durch entsprechendes Betreiben der elektrischen Maschine 31 das über die Antriebswelle 2 bereitgestellte Antriebsmoment gezielt auf die Abtriebswellen 3 und 4 verteilt werden kann. Bei einer derartigen Ausführungsform kann es vorgesehen sein, dass ein Drehzahlfehler zwischen den beiden Abtriebswellen 3 und 4 realisiert ist, beispielsweise durch unterschiedliche Übersetzungen in Achsgetrieben, die den Abtriebswellen 3 und 4 zugeordnet sind. Bevorzugt liegt also jeweils ein Achsgetriebe sowohl in der Wirkverbindung zwischen der Abtriebswelle 3 und der Vorderachse als auch in der Wirkverbindung zwischen der Abtriebswelle 4 und der Hinterachse vor.

Weisen die Achsgetriebe unterschiedliche Übersetzungen auf, so liegen bei einer bestimmten Geschwindigkeit des Kraftfahrzeugs unterschiedliche Drehzahlen der Abtriebswellen 3 und 4 vor. Insoweit ist der Drehzahlfehler zwischen den Abtriebswellen 3 und 4 realisiert. Dieser führt dazu, dass die elektrische Maschine 31 mit einem Drehmoment beaufschlagt und mithin angetrieben wird, sobald das Kraftfahrzeug sich in Bewegung befindet. Besonders vorteilhaft ist diese Ausgestaltung, wenn als elektrische Maschine 31 eine Asynchronmaschine verwendet wird, weil bei dieser keine durch Magnete induzierte Verlustmomente entstehen. Bei Verwendung einer Synchronmaschine, insbesondere einer permanenterregten Synchronmaschine, kann das dann vorliegende Verlustmoment als Vorsteuermoment verwendet werden, sodass stets eine (leichte) Verschiebung des Drehmoments zwischen den Abtriebswellen 3 und 4 realisiert ist.

Werden die Übersetzungen der Achsgetriebe dagegen gleich gewählt, so weisen die Abtriebswellen 3 und 4 bei einer gegebenen Geschwindigkeit des Kraftfahrzeugs üblicherweise dieselbe Drehzahl auf; es liegt also kein oder allenfalls ein geringer Drehzahlfehler vor. Bei einem Stillstand der elektrischen Maschine 31 wird folglich das Antriebsmoment gleich auf die Antriebswellen 3 und 4 verteilt und lediglich bei einem Antreiben der elektrischen Maschine 31 in die eine oder die andere Richtung entweder der ersten Abtriebswelle 3 oder der zweiten Abtriebswelle 4 der größere Teil des Antriebsmoments zur Verfügung gestellt.

Ist der Drehzahlfehler realisiert, so kann durch einen generatorischen Betrieb der elektrischen Maschine 31, der ein negatives Drehmoment erzeugt, der zweiten Abtriebswelle 3 ein größerer Teil des Antriebsmoments zur Verfügung gestellt werden als der zweiten Abtriebswelle 4. Um dagegen der zweiten Abtriebswelle 4 den größeren Teil des Antriebsmoments zur Verfügung zu stellen, muss die elektrische Maschine 31 zum Bereitstellen eines positiven Drehmoments motorisch betrieben werden.

Selbstverständlich kann durch entsprechende Wahl der Übersetzung, insbesondere der Achsgetriebe, auch eine umgekehrte Ausführungsform bereitgestellt werden, bei welcher durch den generatorischen Betrieb der zweiten Abtriebswelle 4 der größere Teil des Antriebsmoments zur Verfügung gestellt wird und im motorischen Betrieb der ersten Abtriebswelle 3 der größere Teil des Antriebsmoments bereitgestellt wird. Dies ist vorteilhaft, weil zum Beschleunigen üblicherweise der Hinterachse und mithin der zweiten Abtriebswelle 4 mehr Drehmoment als der Vorderachse beziehungsweise der ersten Abtriebswelle 3 zugeführt werden soll. Gleichzeitig soll besonders bevorzugt eine Torque Vectoring-Einrichtung, mit welcher Drehmoment gezielt auf die Räder der Hinterachse aufgeteilt werden kann, betrieben werden, um eine möglichst gute Beschleunigungswirkung zu erzielen.

Der Betrieb dieser Einrichtung benötigt jedoch elektrische Energie und belastet mithin das elektrische Bordnetz des Kraftfahrzeugs. Dieses kann nun mit Hilfe des durch den zum Beschleunigen des Kraftfahrzeugs gewählten generatorischen Betrieb der elektrischen Maschine 31 gestützt beziehungsweise unterstützt werden. Idealerweise ist allein die durch den generatorischen Betrieb erzeugte Leistung ausreichend, um die Torque Vectoring-Einrichtung zu betreiben. Insbesondere sind die Übersetzungen der Achsgetriebe entsprechend gewählt.

Selbstverständlich ist auch eine Variante realisierbar, bei welcher die Torque Vectoring-Einrichtung der Vorderachse zugeordnet ist und durch den generatorischen Betrieb der elektrischen Maschine 31 der Vorderachse mehr Drehmoment zugeführt wird als der Hinterachse. Auch eine Variante, bei welcher sowohl für die Hinterachse als auch für die Vorderachse jeweils eine derartige Torque Vectoring-Einrichtung vorgesehen ist, ist möglich.

In der zweiten Schaltstellung 35 ist die elektrische Maschine 1 starr mit der zweiten Eingangswelle 30 beziehungsweise der zweiten Abtriebswelle 4 wirkverbunden. Sie kann somit entweder zur Bereitstellung eines zusätzlichen Antriebsmoments an der zweiten Abtriebswelle 4 oder alternativ durch generatorischen Betrieb zur Rekuperation herangezogen werden. Die beschriebene Mittendifferentialgetriebeanordnung 1 stellt insoweit sowohl die Funktionalität eines aktiven Mittendifferentials als auch eine Hybridfunktion beispielsweise für ein Mildhybridkraftfahrzeug bereit.

### BEZUGSZEICHENLISTE

- 1: Mittendifferentialgetriebeanordnung
- 2: Antriebswelle
- 3: 1. Abtriebswelle
- 4: 2. Abtriebswelle
- 5: Differentialgetriebe
- 6: Hohlrad
- 7: Planetenträger
- 8: äußeres Planetenrad
- 9: inneres Planetenrad
- 10: Sonnenrad
- 11: Koppelgetriebe
- 12: Zwischengetriebe
- 13: Planetenrad
- 14: Achse
- 15: Sonnenrad
- 16: Zwischenwelle
- 17: Überlagerungsgetriebe
- 18: 1. Planetengetriebe
- 19: 2. Planetengetriebe
- 20: Sonnenrad
- 21: Planetenträger
- 22: Planetenrad
- 23: Hohlrad
- 24: Sonnenrad
- 25: Planetenträger
- 26: Planetenrad
- 27: Hohlrad
- 28: Befestigung
- 29: 1. Eingangswelle
- 30: 2. Eingangswelle
- 31: elektrische Maschine
- 32: Ausgangswelle
- 33: Kupplungseinrichtung
- 34: 1. Schaltstellung
- 35: 2. Schaltstellung
- 36: Pfeil
- 37: Hohlrad
- 38: Zahnrad
- 39: Zahnrad
- 40: Zahnrad

## Patentansprüche

1. Mittendifferentialgetriebeanordnung (1) für eine Antriebseinrichtung eines Kraftfahrzeugs, mit einer Antriebswelle (2), mit einer ersten Abtriebswelle (3) für eine Vorderachse des Kraftfahrzeugs und einer zweiten Abtriebswelle (4) für eine Hinterachse des Kraftfahrzeugs sowie mit einem als Planetengetriebe ausgebildeten Differentialgetriebe (5), **gekennzeichnet durch** eine Kupplungseinrichtung (33), die eine elektrische Maschine (31) in einer ersten Schaltstellung (34) über das Differentialgetriebe (5) und in einer zweiten Schaltstellung (35) über ein Überlagerungsgetriebe (17) unmittelbar mit der zweiten Abtriebswelle (4) in Wirkverbindung setzt, wobei das Überlagerungsgetriebe (18) aus einem ersten Planetengetriebe (18) und einem zweiten Planetengetriebe (19) besteht und Hohlräder (23,27) der beiden Planetengetriebe (18,19) drehfest miteinander wirkverbunden sind.

2. Mittendifferentialgetriebeanordnung nach Anspruch 1, **dadurch gekennzeichnet, dass** ein Hohlrad (6) des Differentialgetriebes (5) unmittelbar mit der Antriebswelle (2), ein Planetenträger (7) des Differentialgetriebes (5) unmittelbar mit der ersten Abtriebswelle (3) und ein Sonnenrad (10) des Differentialgetriebes (5) unmittelbar mit der zweiten Abtriebswelle (4) wirkverbunden ist, wobei an dem Planetenträger (7) wenigstens ein mit dem Hohlrad (6) kämmendes äußeres Planetenrad (8) und wenigstens ein sowohl mit dem äußeren Planetenrad (8) als auch dem Sonnenrad (10) kämmendes inneres Planetenrad (9) gelagert sind.

3. Mittendifferentialgetriebeanordnung nach einem der vorhergehenden Ansprüche, **dadurch gekennzeichnet, dass** das Differentialgetriebe (5) einen ersten Getriebeteil eines reduzierten Koppelgetriebes (11) aufweist und ein zweiter Getriebeteil des reduzierten Koppelgetriebes (11) einem Zwischengetriebe (12) zugeordnet ist, dessen Sonnenrad (15) an einer Zwischenwelle (16) vorgesehen ist.

4. Mittendifferentialgetriebeanordnung nach einem der vorhergehenden Ansprüche, **dadurch gekennzeichnet, dass** ein Sonnenrad (20) des ersten Planetengetriebes (18) festgesetzt ist.

5. Mittendifferentialgetriebeanordnung nach einem der vorhergehenden Ansprüche, **dadurch gekennzeichnet, dass** ein Planetenträger (21) des ersten Planetengetriebes (18) drehfest mit einer ersten Eingangswelle (29) des Überlagerungsgetriebes (17) wirkverbunden ist.

6. Mittendifferentialgetriebeanordnung nach einem der vorhergehenden Ansprüche, **dadurch gekennzeichnet, dass** ein Sonnenrad (24) des zweiten Planetengetriebes (19) drehfest mit der elektrischen Maschine (31) wirkverbunden ist.

7. Mittendifferentialgetriebeanordnung nach einem der vorhergehenden Ansprüche, **dadurch gekennzeichnet, dass** ein Planetenträger (25) des zweiten Planetengetriebes (19) drehfest mit einer zweiten Eingangswelle (30) des Überlagerungsgetriebes (17) wirkverbunden ist, wobei die zweite Eingangswelle (30) drehfest mit der zweiten Abtriebswelle (4) in Wirkverbindung steht oder diese wenigstens teilweise ausbildet.

8. Mittendifferentialgetriebeanordnung nach einem der Ansprüche 5 bis 7, **dadurch gekennzeichnet, dass** in der ersten Schaltstellung (34) der Kupplungseinrichtung (33) die Zwischenwelle (16) mit der ersten Eingangswelle (29) drehfest wirkverbunden ist.

9. Mittendifferentialgetriebeanordnung nach einem der Ansprüche 5 bis 8, **dadurch gekennzeichnet, dass** in der zweiten Schaltstellung (35) der Kupplungseinrichtung (33) die erste Eingangswelle (29) festgesetzt ist.

10. Mittendifferenzialgetriebeanordnung nach einem der vorhergehenden Ansprüche, **dadurch gekennzeichnet, dass** den Abtriebswellen (3,4) Achsgetriebe mit unterschiedlichen Übersetzungen zugeordnet sind.

11. Mittendifferenzialgetriebeanordnung nach Anspruch 10, **dadurch gekennzeichnet, dass** ein erstes der Achsgetriebe in der Wirkverbindung zwischen der ersten Abtriebswelle (3) und der Vorderachse und ein zweites der Achsgetriebe in der Wirkverbindung zwischen der zweiten Abtriebswelle (4) und der Hinterachse vorliegt.

## Claims

1. Central differential gear arrangement (1) for a drive device of a vehicle, with a drive shaft (2), with a first drive shaft (3) for a front axle of the vehicle and a second drive shaft (4) for a rear axle of the vehicle as well with a differential gear (5) formed as a planetary gear (5), **characterised by** a coupling device (33) that brings an electrical machine (31) in a first switching position (34) directly into active engagement with the second drive shaft via the differential gear (5), and in a second switching position (35) directly into active engagement with the second drive shaft (4) via a superposed gear (17), wherein the superposed gear (18) consists of a first planetary gear (18) and a second planetary gear (19) and ring gears (23, 27) of both planetary gears (18, 19) are actively connected to one another in a torque-proof manner.

2. Central differential gear arrangement according to claim 1, **characterised in that** a ring gear (6) of the differential gear (5) is directly actively connected to the drive shaft (2), a planetary carrier (7) of the differential gear drive (5) is directly actively connected to the first drive shaft (3) and a sun gear (10) of the differential gear drive (5) is directly actively connected to the second drive shaft (4), wherein at least one outer planetary wheel (8) meshing with the ring gear (6) and at least one inner planetary wheel (9) meshing with the outer planetary wheel (8) and also with the sun wheel (10) are mounted on the planetary gear (7).

3. Central differential gear arrangement according to one of the preceding claims, **characterised in that** the differential gear (5) comprises a first gear part of a reduced coupler mechanism (11), and a second gear part of the reduced coupler mechanism (11) is associated with an intermediate gear (12), the sun wheel (15) of which is provided on an intermediate shaft (16).

4. Central differential gear arrangement according to one of the preceding claims, **characterised in that** a sun wheel (20) of the first planetary gear (18) is fixed.

5. Central differential gear arrangement according to one of the preceding claims, **characterised in that** a planetary carrier (21) of the first planetary gear (18) is actively connected in a torque-proof manner to a first input shaft (29) of the superposed gear (17).

6. Central differential gear arrangement according to one of the preceding claims, **characterised in that** a sun wheel (24) of the second planetary gear (19) is actively connected in a torque-proof manner to the electric machine (31).

7. Central differential gear arrangement according to one of the preceding claims, **characterised in that** a planetary carrier (25) of the second planetary gear (19) is actively connected in a torque-proof manner to a second input shaft (30) of the superposed gear (17), wherein the second input shaft (30) is actively connected in a torque-proof manner to the second drive shaft (4) or at least forms part of this.

8. Central differential gear arrangement according to one of claims 5 to 7, **characterised in that** in the first switching position (34) of the coupling device (33) the intermediate shaft (16) is actively connected in a torque-proof manner to the first input shaft (29).

9. Central differential gear arrangement according to one of claims 5 to 8, **characterised in that** in the second switching position (35) of the coupling device (33) the first input shaft (29) is fixed.

10. Central differential gear arrangement according to one of the preceding claims, **characterised in that** axle drives with different ratios are associated with the drive shafts (3, 4).

11. Central differential gear arrangement according to claim 10, **characterised in that** a first of the axle drives is in active connection between the first drive shaft (3) and the front axle and a second of the axle drives is in active connection between the second drive shaft (4) and the rear axle.

## Revendications

1. Dispositif différentiel central (1) pour un dispositif de propulsion d'un véhicule automobile, avec un arbre moteur (2), avec un premier arbre de sortie (3) destiné à un essieu avant du véhicule automobile et avec un deuxième arbre de sortie (4) destiné à un essieu arrière du véhicule automobile ainsi qu'avec un différentiel (5) conçu comme un engrenage planétaire, **caractérisé par** un dispositif d'embrayage (33) qui met en liaison active avec le deuxième arbre de sortie (4) une machine électrique (31) dans une première position de couplage (34) par l'intermédiaire du différentiel (5) et dans une deuxième position de couplage (35) par l'intermédiaire d'une transmission à superposition (17), la transmission à superposition (18) étant constituée d'un premier engrenage planétaire (18) et d'un deuxième engrenage planétaire (19) et des couronnes (23, 27) des deux engrenages planétaires (18, 19) étant en liaison active l'une avec l'autre de manière solidaire en rotation.

2. Dispositif différentiel central selon la revendication 1, **caractérisé en ce qu'**une couronne (6) du différentiel (5) est en liaison active directement avec l'arbre moteur (2), une cage de transmission planétaire (7) du différentiel (5) est en liaison active directement avec le premier arbre de sortie (3) et une roue solaire (10) du différentiel (5) est en liaison active directement avec le deuxième arbre de sortie (4), au moins une roue planétaire (8) extérieure qui s'engrène dans la couronne (6) et au moins une roue planétaire intérieure (9) qui s'engrène aussi bien dans la roue planétaire extérieure (8) que dans la roue solaire (10) étant montées dans la cage de transmission planétaire (7).

3. Dispositif différentiel central selon l'une des revendications précédentes, **caractérisé en ce que** le différentiel (5) comporte une première partie d'engrenage d'un engrenage couplé réduit (11) et **en ce qu'**une deuxième partie d'engrenage de l'engrenage couplé réduit (11) est associée à une transmission intermédiaire (12) dont la roue solaire (15) est prévue au niveau d'un arbre intermédiaire (16).

4. Dispositif différentiel central selon l'une des revendications précédentes, **caractérisé en ce qu'**une roue solaire (20) du premier engrenage planétaire (18) est fixée.

5. Dispositif différentiel central selon l'une des revendications précédentes, **caractérisé en ce qu'**une cage de transmission planétaire (21) du premier engrenage planétaire (18) est en liaison active avec un premier arbre d'entrée (29) de la transmission à superposition (17) de manière solidaire en rotation.

6. Dispositif différentiel central selon l'une des revendications précédentes, **caractérisé en ce qu'**une roue solaire (24) du deuxième engrenage planétaire (19) est en liaison active avec la machine électrique (31) de manière solidaire en rotation.

7. Dispositif différentiel central selon l'une des revendications précédentes, **caractérisé en ce qu'**une cage de transmission planétaire (25) du deuxième engrenage planétaire (19) est en liaison active avec un deuxième arbre d'entrée (30) de la transmission à superposition (17), le deuxième arbre d'entrée (30) étant en liaison active avec le deuxième arbre de sortie (4) de manière solidaire en rotation ou formant au moins partiellement celui-ci.

8. Dispositif différentiel central selon l'une des revendications 5 à 7, **caractérisé en ce que,** dans la première position de couplage (34) du dispositif d'embrayage (33), l'arbre intermédiaire (16) est en liaison active avec le premier arbre d'entrée (29) de manière solidaire en rotation.

9. Dispositif différentiel central selon l'une des revendications 5 à 8, **caractérisé en ce que**, dans la deuxième position de couplage (35) du dispositif d'embrayage (33), le premier arbre d'entrée (29) est fixé.

10. Dispositif différentiel central selon l'une des revendications précédentes, **caractérisé en ce que** des ponts avec des rapports différents sont associés aux arbres de sortie (3, 4).

11. Dispositif différentiel central selon la revendication 10, **caractérisé en ce que** l'un des ponts se trouve dans la liaison active entre le premier arbre de sortie (3) et l'essieu avant et l'autre pont se trouve dans la liaison active entre le deuxième arbre de sortie (4) et l'essieu arrière.
